# EUROPEAN PATENT APPLICATION

(11) **EP 4 624 337 A1**
(43) Date of publication of application: **01.10.2025**
(21) Application number: 24167140.3
(22) Date of filing: 28.03.2024
(51) Int. Cl.: B64F 5/10, B64C 1/06

(54) **METHOD OF INSTALLING A MODULE DURING ASSEMBLY OF A FUSELAGE OF AN AIRCRAFT OR SPACECRAFT, AS WELL AS ARRANGEMENT**

(71) Applicant: Airbus Operations GmbH, 21129 Hamburg (DE)
(72) Inventor: Benthien, Hermann, 21129 Hamburg (DE); Hegenbart, Matthias, 21129 Hamburg (DE); Roth, Ingo, 21129 Hamburg (DE)

(57) **Abstract**

The invention proposes a method of installing a module (36, 36a-k, 36m) during assembly of a fuselage (1001) of an aircraft or spacecraft (1000). Cantilevered supporting sections (21) of at least one supporting device (19) are inserted through window openings (15) in a structure (3) of a fuselage section (1) from an outer side of the fuselage section into an interior (6) thereof, the supporting device being supported outside of the fuselage section. The module is inserted from an open end side (46) of the fuselage section into the interior. The module is being supported and displaceably guided for movement thereof along a longitudinal direction (x) of the fuselage section in the interior thereof by a guiding arrangement (28) supported by at least some of the supporting sections. The module is being positioned within a sectional plane (SP) of the fuselage section intersecting the longitudinal direction, whereby an operative connection of module-side and section-side interface portions (64, 66, 64', 66') of at least one tolerance-compensating attachment device (55, 55') for mechanically coupling the module to the structure or to another module or component of the fuselage section is brought about. Furthermore, an arrangement (200a-k, 200m) for installing a module, in particular by performing such a method, is proposed.

## Description

### TECHNICAL FIELD OF THE INVENTION

The present invention relates to a method of and an arrangement for installing a module during assembly of a fuselage of an aircraft or spacecraft.

### TECHNICAL BACKGROUND

Even though the invention may be useful in the context of assembly of fuselages or fuselage-type portions, in particular of lightweight design, for aircraft or spacecraft of various kinds and shapes, the invention and the underlying problem will be explained in the following in exemplary manner with respect to assembling a fuselage of an aircraft such as a commercial passenger aeroplane, but without limiting the invention to that effect.

It is known as such to assemble a fuselage of an aircraft, such as for instance a passenger or freight aircraft, from several, typically substantially barrel-shaped fuselage sections. The fuselage sections are large but lightweight components which are to some extent elastically deformable, both under their own weight and due to further loads which may act thereon.

Conventionally, during fuselage assembly, many elements and components that are to be installed in the fuselage and in particular on and within the structure thereof, e.g. elements of a secondary structure, systems such as cables and conduits, insulation, interior trim elements, passenger seats, storage compartments, galleys, lavatories, as well as various further devices and cabin components, are installed within the fuselage primary structure in a largely manual process, by individually mounting and assembling such elements, pieces and components often bit-by-bit inside the fuselage structure, individually or as assemblies of strongly limited sizes and weights. This approach is relatively labor-intensive, time-consuming and costly.

Jigs have been proposed to simplify the installation of some of the aforementioned elements and components. Such conventional jigs, however, usually have considerable weight and require considerable room.

Also, despite considerable effort for accurate manufacturing of the fuselage sections, conventionally, tolerances occur due to the large size and lightweight, elastic nature of the sections. It is time-consuming to precisely adjust the elements and components installed within the fuselage to make sure that inevitable tolerances of the fuselage sections are taken into account and that these elements and components, many of which may be visible to the passenger during travel, are properly aligned and neatly arranged.

Moreover, it has been found that during assembly of an aircraft fuselage, possible deflection of a passenger floor during installation or passage of heavy objects should be carefully considered.

A tolerance-compensating mounting system, in particular for mounting interior equipment elements in an aircraft, is described in DE 10 2019 118 494 A1. Furthermore, a tolerance compensation subassembly and an aircraft having such a tolerance compensation subassembly are described in DE 10 2019 111 001 A1 and US 2020/0339283 A1.

### SUMMARY OF THE INVENTION

In view of this background, a problem to be solved by the present invention therefore is to propose a way of further improving the assembly of an aircraft or spacecraft fuselage.

This problem is solved by a method having the features of claim 1 and/or by an arrangement having the features of claim 15.

Accordingly, the invention proposes a method of installing a module during assembly of a fuselage of an aircraft or spacecraft, the method comprising:
- inserting cantilevered supporting sections of at least one supporting device through window openings provided in a structure of a fuselage section for the fuselage from an outer side of the fuselage section into an interior thereof, the supporting device being supported outside of the fuselage section on a substantially rigid load support body;
- inserting the module from an open end side of the fuselage section into the interior thereof, and supporting and displaceably guiding the module for movement thereof along a longitudinal direction of the fuselage section in the interior thereof by a guiding arrangement supported by at least some of the cantilevered supporting sections; and
- positioning the module within a sectional plane of the fuselage section intersecting the longitudinal direction of the fuselage section and thereby bringing about an operative connection of a module-side interface portion and a section-side interface portion of at least one tolerance-compensating attachment device for mechanically coupling the module to the structure or to another module or component of the fuselage section.

Furthermore, the invention provides an arrangement for installing a module during assembly of a fuselage of an aircraft or spacecraft, in particular by performing the method of the invention. The arrangement comprises a substantially rigid load support body; at least one supporting device adapted to be supported on the substantially rigid load support body outside of a fuselage section for the fuselage, wherein the supporting device has cantilevered supporting sections configured to be insertable through window openings provided in a structure of the fuselage section from an outer side of the fuselage section into an interior thereof; and a guiding arrangement configured to be supported by the cantilevered supporting sections and adapted to support and displaceably guide the module, which is insertable from an open end side of the fuselage section into the interior thereof, for movement of the module along a longitudinal direction of the fuselage section in the interior thereof. The arrangement proposed by the invention is configured to enable positioning of the module within a sectional plane of the fuselage section intersecting the longitudinal direction of the fuselage section and thereby bringing about an operative connection of a module-side interface portion and a section-side interface portion of at least one tolerance-compensating attachment device for mechanically coupling the module to the structure or to another module or component of the fuselage section.

It is one idea of the invention to install larger modules within the fuselage section, instead of a manual installation of a large number of small elements bit-by-bit, and at the same time to avoid the introduction of loads stemming from the weight of jigs for installation of such larger assemblies or modules into the structure of the fuselage that is being produced, for example into an already installed floor or floor grid. In this manner, the invention helps to prevent additional elastic deformation of such structural elements, e.g. floor deflection, due to the jig weight, which might be considerable, and hence prevents positional and/or orientational imprecisions which might result therefrom in the final product.

Further, it is an idea of the invention to avoid the introduction of loads stemming from the weight of the module, which may be large, into portions of the structure other than those portions which are specifically designed to sustain these loads. Again, imprecisions in the assembled fuselage are thus prevented.

Instead of introducing additional loads stemming from installation devices, jigs, etc. into the fuselage structure or supporting the weight of the module by portions of the structure besides those portions specifically designed for these loads, the invention provides a way of directly supporting those loads on a rigid, insensitive, essentially indeformable load support body that is capable of supporting high loads, in particular a workshop floor and/or workshop foundation, for instance made from a large mass of concrete. Accordingly, a "load free" installation of the modules is made possible by the invention, which contributes to high precision and quality of the assembled fuselage.

The invention thus provides a way of supporting the module(s) to be installed in a manner which avoids an influence of the weight of additional jigs on the structure, furthermore strongly limits an obstruction of the working space inside the fuselage section by additional jigs, thereby renders work in the interior of the fuselage also more ergonomic and less strenuous, and at the same time enables improved, precise alignment and orientation of the modules before these are being connected to structural or other components within the fuselage section. A highly precise assembly of the fuselage is therefore considerably facilitated by the invention.

Further, the invention may even enable an installation of large modules within a fuselage in an at least partially "blind" manner, with relatively limited access to the attachment devices.

Still further, the present invention, using the combination of guiding the module for movement thereof along the longitudinal direction of the fuselage section and positioning the module within the sectional plane intersecting that longitudinal direction, e.g. by positioning the module via a substantially vertical displacement, enables a type of "Master-Slave-Design" for big modules in flight direction.

Advantageous improvements and developments of the invention are contained in the dependent claims as well as in the description referring to the drawings.

In a development, the load support body is a workshop floor and/or workshop foundation. Such a load support body is stable and highly rigid, in particular considerably more rigid than a lightweight fuselage structure. A workshop floor or workshop foundation can thus provide a precise support for considerable loads.

In accordance with a development, the sectional plane within which the module is being positioned is oriented transverse to the longitudinal direction of the fuselage section, in particular substantially perpendicular to the longitudinal direction of the fuselage section. This may help to facilitate the assembly process.

According to a development, the cantilevered supporting sections are inserted into and through the window openings by displacing the cantilevered supporting sections and/or the supporting device along a substantially horizontal direction. In this manner, cantilevered supporting sections that extend substantially horizontally within the fuselage section can be implemented in a simple manner. Such substantially horizontal supporting sections contribute to an expedient implementation of the assembly process, for example considering that in case of commercial aircraft, passenger and cargo floors usually extend approximately horizontally within the fuselage.

In particular, the supporting device may in a further improvement be movably supported on the substantially rigid load support body, in particular by one or more rails, preferably along a substantially horizontal direction transverse to the longitudinal direction of the fuselage section. Using rails, for instance, the supporting device may be precisely guided and at the same time is capable of introducing high loads into the load support body, e.g. the workshop floor or foundation.

According to a development, the tolerance-compensating attachment device automatically performs tolerance compensation when the module-side interface portion and the section-side interface portion are being brought into operative connection. In this way, a module installation with automated tolerance compensation is made possible, the tolerance compensation being accomplished in a rapid and simple manner.

In a development, positioning the module within the sectional plane comprises displacing the module along a first direction, in particular by moving the module along a straight line.

According to an improvement, the tolerance-compensating attachment device compensates tolerances at least in a second direction transverse, in particular perpendicular, to the first direction. Alternatively, in a development, the tolerance-compensating attachment device may compensate tolerances at least in two different second and third directions extending within a common plane that intersects, in particular is transverse, preferably perpendicular, to the first direction.

In accordance with a development, the step of positioning the module within the sectional plane is accomplished using a positioning arrangement supported by the at least some of the cantilevered supporting sections via the guiding arrangement.

In particular, the method may include aligning the module with respect to a master reference and then bringing about the operative connection of the module-side and section-side interface portions.

According to a development, the method further includes a step of fixing the module-side and section-side interface portions with respect to each other after the tolerance compensation has been accomplished by the attachment device, in order to complete the mechanical coupling of the module and the structure or the other module or component of the fuselage section.

In a development, the step of positioning the module may include displacing the module along a substantially vertical direction, in particular vertically downwards, relative to the cantilevered supporting sections and compensating positional tolerances by the tolerance-compensating attachment device(s) within a substantially horizontal plane. This may help to achieve a particularly expedient and simple installation of the module.

According to an improvement, the method comprises mechanically coupling the module to the structure or to the other module or component of the fuselage section using at least two tolerance-compensating attachment devices, in particular tolerance-compensating attachment devices of the same type or of different type, wherein preferably each of the tolerance-compensating attachment devices enables at least a compensation, more preferably triaxial compensation, of positional tolerances and/or at least a compensation, preferably triaxial compensation, of angular tolerances.

In a preferred improvement, the method comprises mechanically coupling the module to the structure or to the other module or component of the fuselage section using at least two tolerance-compensating attachment devices of different type, wherein a first one of the tolerance-compensating attachment devices enables at least a compensation of positional tolerances and a second one of the tolerance-compensating attachment devices enables at least a compensation of angular tolerances.

For example, the first one of the tolerance-compensating attachment devices may include a first teeth plate arranged on the module-side interface portion and a second teeth plate arranged on the section-side interface portion, wherein the first and second teeth plates are configured to engage with each other. This may contribute, for example, to compensating high longitudinal tolerances in flight direction.

Furthermore, the second one of the tolerance-compensating attachment devices may include a rotary joint attachment.

In particular, the module may be a cargo hold floor module or a triangle module or a passenger cabin floor module or an integrated passenger cabin floor and triangle module or a tank module or a mixer unit module of an air-conditioning system or a crown module or a hatrack module or a ceiling module or a sidewall module or a seat module or a monument, in particular a galley monument or a lavatory monument or a stowage compartment monument. Thus, a great variety of modules to be installed during assembly of an aircraft fuselage can be efficiently and precisely installed.

The developments, improvements and implementations of the invention described above can be applied in analogous manner to each of the method and arrangement of the invention.

### BRIEF SUMMARY OF THE DRAWINGS

The present invention is explained in more detail below with reference to the embodiments shown in the schematic figures, wherein:
- Fig. 1: shows an exemplary aircraft comprising a fuselage that has been assembled using a method and arrangement according to one or more of the embodiments of the present invention described herein with reference to Figs. 2 to 26B;
- Fig. 2: schematically shows a cross-sectional view of a fuselage section as well as two supporting devices and cantilevered supporting sections thereof inserted through window openings of the fuselage section, according to an embodiment;
- Fig. 3: schematically shows the fuselage section of Fig. 2, including a guiding arrangement supported by the cantilevered supporting sections;
- Fig. 4: schematically shows, in a perspective view, an elongated barrelshaped portion of a fuselage and a plurality of supporting devices arranged on opposite lateral sides of the portion of the fuselage;
- Fig. 5A, 5B: schematically show, in perspective views, a barrel-shaped fuselage section and a single supporting device, with short cantilevered supporting sections thereof retracted from and inserted into window openings, respectively;
- Fig. 6A, 6B: schematically show, in perspective views, a barrel-shaped fuselage section and two supporting devices, with short cantilevered supporting sections thereof retracted from and inserted into window openings, respectively;
- Fig. 7: schematically shows, in a perspective view, a barrel-shaped fuselage section and a single supporting device, with long cantilevered supporting sections thereof inserted into window openings;
- Fig. 8: schematically shows, in a perspective view, a barrel-shaped fuselage section and two supporting devices, with medium-length cantilevered supporting sections thereof inserted into window openings;
- Fig. 9: schematically shows, in a perspective view, a barrel-shaped fuselage section and two supporting devices, with cantilevered supporting sections thereof inserted into window openings, supporting a temporary platform within the fuselage section;
- Fig. 10A-B: schematically illustrate, in a cross-section of a fuselage section, a method and arrangement in accordance with an embodiment, for installation of a cargo hold floor module;
- Fig. 11: schematically illustrates, in a cross-section of a fuselage section, a method and arrangement in accordance with a further embodiment, for installation of Bermuda triangle modules;
- Fig. 12: schematically illustrates, in a cross-section of a fuselage section, a method and arrangement in accordance with a further embodiment, for installation of a tank module;
- Fig. 13: schematically illustrates, in a cross-section of a fuselage section, a method and arrangement in accordance with a further embodiment, for installation of both triangle and tank modules at the same time or in rapid succession;
- Fig. 14: schematically illustrates, in a cross-section of a fuselage section, a method and arrangement in accordance with a further embodiment, for installation of a mixer unit module;
- Fig. 15: schematically illustrates, in a cross-section of a fuselage section, a method and arrangement in accordance with a further embodiment, for installation of a passenger cabin floor module;
- Fig. 16: schematically illustrates, in a cross-section of a fuselage section, a method and arrangement in accordance with a further embodiment, for installation of an integrated triangle and passenger cabin floor module;
- Fig. 17A-B: schematically illustrate, in a cross-section of a fuselage section, a method and arrangement in accordance with a further embodiment, for installation of an integrated triangle and passenger cabin floor module;
- Fig. 18A-B: schematically illustrate, in a cross-section of a fuselage section, a method and arrangement in accordance with a further embodiment, for installation of a crown module;
- Fig. 19: schematically illustrates, in a cross-section of a fuselage section, a method and arrangement in accordance with a further embodiment, for installation of a hatrack module;
- Fig. 20A-B: schematically illustrate, in a cross-section of a fuselage section, a method and arrangement in accordance with a further embodiment, for installation of a ceiling module;
- Fig. 21: schematically illustrates, in a cross-section of a fuselage section, a method and arrangement in accordance with a further embodiment, for installation of a sidewall module;
- Fig. 22: schematically illustrates, in a cross-section of a fuselage section, a method and arrangement in accordance with a further embodiment, for installation of a seat module;
- Fig. 23: schematically illustrates, in a cross-section of a fuselage section, a method and arrangement in accordance with a further embodiment, for installation of a monument module;
- Fig. 24: schematically illustrates methods according to embodiments of the invention using a flow diagram;
- Fig. 25: illustrates, in a side view, a first tolerance-compensating attachment device which may be used in embodiments of the invention; and
- Fig. 26: illustrates, in a side view, a second tolerance-compensating attachment device which may be used in embodiments of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

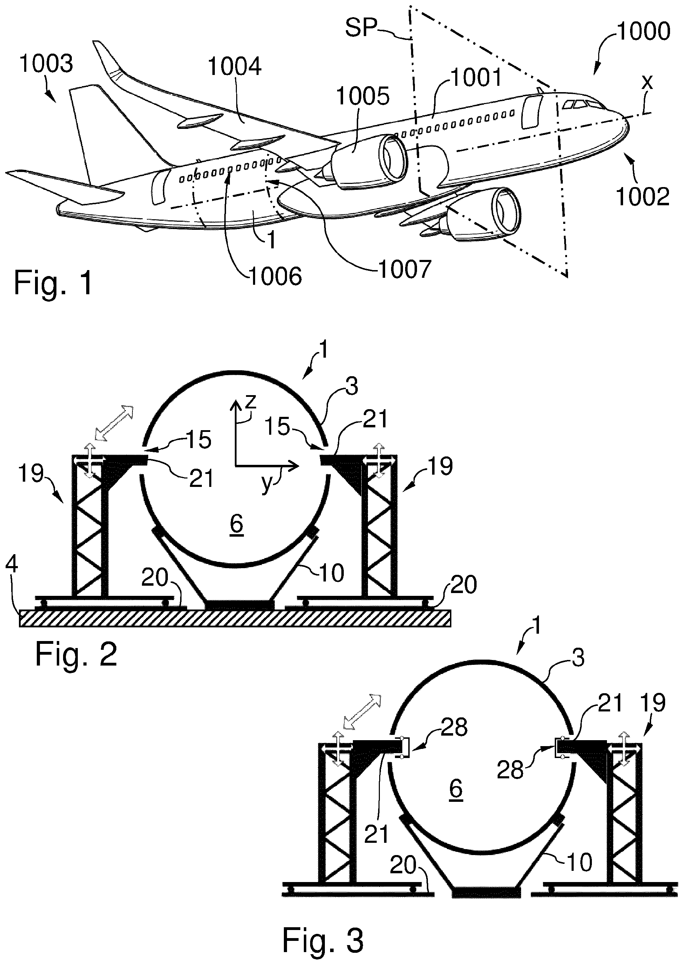

Fig. 1 shows an aircraft 1000, configured as an exemplary passenger aircraft, comprising a fuselage 1001 having a nose 1002, an empennage 1003, wings 1004 and engines 1005 attached to the wings 1004. The fuselage 1001 is assembled in accordance with a method or methods according to one or more of the embodiments of the invention which will be described in the following with reference to Figs. 2 to 26B, and using corresponding arrangements 200a-k, 200m in accordance with one or more of these embodiment(s).

The fuselage 1001 in Fig. 1 is assembled by joining several substantially barrel-shaped fuselage sections 1 to each other along circumferential joints 1007. In accordance with the embodiments described herein, before joining the fuselage sections 1, these sections 1 are preferably completed and outfitted to a high degree. In particular, not only a primary structure of the fuselage section 1 has been completely assembled, from components including e.g. frames, stringers and skin elements, which for instance may be pre-assembled as shells, but also, internal structural components, in particular a secondary structure, and further components and systems have already been installed. These further components and systems may include components and systems that are part of a passenger cabin and thus may be components that remain visible to the passengers, or may include functional components that will not be visible to the passengers after outfitting of the fuselage 1001 has been completed and the fuselage 1001 thus has been completely assembled, or may include both.

Fig. 2 shows one of the fuselage sections 1 in a cross-sectional view, transverse to a longitudinal direction x of the fuselage 1001. The plane shown in Fig. 2 corresponds to a sectional plane SP normal to the longitudinal direction x, shown in ex-exemplary and schematic manner in Fig. 1. The fuselage section 1 comprises a structure 3 enclosing an interior 6 of the fuselage section 1. In Fig. 2, only peripheral portions of the structure 3 are shown in a schematic and simplified manner, while floor structures of passenger and cargo hold floors, for example, which extend in a horizontal, transverse direction y, have not yet been installed. The structure 3 is comparatively large but lightweight, and to some extent elastically deformable.

The fuselage section 1 is supported within a lower region thereof by a central support 10, on which the fuselage section 1 rests. The structure 3 of the fuselage section 1 comprises window openings 15, which in the fully completed fuselage 1001 will be closed by window panes. In line with the embodiments described herein, the window panes are installed at a late stage during the assembly of the fuselage 1001, close to completion thereof. Windows 1006 of the fuselage 1001 formed in this way are illustrated in Fig. 1.

Fig. 2 further shows supporting devices 19, laterally arranged with respect to the fuselage section 1. On each of both lateral sides of the fuselage section 1, seen in the transverse horizontal direction y, one of the supporting devices 19 is movably supported outside of the fuselage section 1 on a rigid workshop floor or workshop foundation. The workshop floor or foundation is capable of acting as a rigid load support body 4 and is configured to sustain considerable loads substantially without being deformed. In particular, the load support body 4 may be made from concrete. Components having considerable weight may thus be supported in a precise manner on the load support body 4. In Fig. 2, the load support body 4 supports the lateral supporting devices 19 as well as the central support 10. More particularly, each of the supporting devices 19 may be supported on a rail 20, e.g. made from steel, that is fixedly connected to the load support body 4, for precise displacement of each supporting device 19 along the transverse direction y.

Each of the supporting devices 19 comprises one or more cantilevered supporting section(s) 21, which in a beam-type manner extend, substantially parallel to the transverse direction y, through one of the window openings 15 each, from an outer side of the fuselage section 1 into the interior 6 thereof. More specifically, the cantilevered supporting sections 21 are adapted to be inserted through the window openings 15 from the outer side of the fuselage section 1. The supporting devices 19, including the cantilevered supporting sections 21, may be made from steel and are thus robust as well as strong and stiff.

Fig. 3 shows that each of the cantilevered supporting sections 21 is configured to support a guiding arrangement 28. The configuration in Fig. 3 is exemplary only, and the guiding arrangement 28 may be configured in different manners. In particular, each guiding arrangement 28 may be configured with a longitudinal rail connected to the cantilevered supporting section 21 and a carriage (not shown in detail) that is movably supported by the longitudinal rail. In this manner, the guiding arrangement 28 in particular provides for a motion along a straight line parallel to the longitudinal direction x within the interior 6.

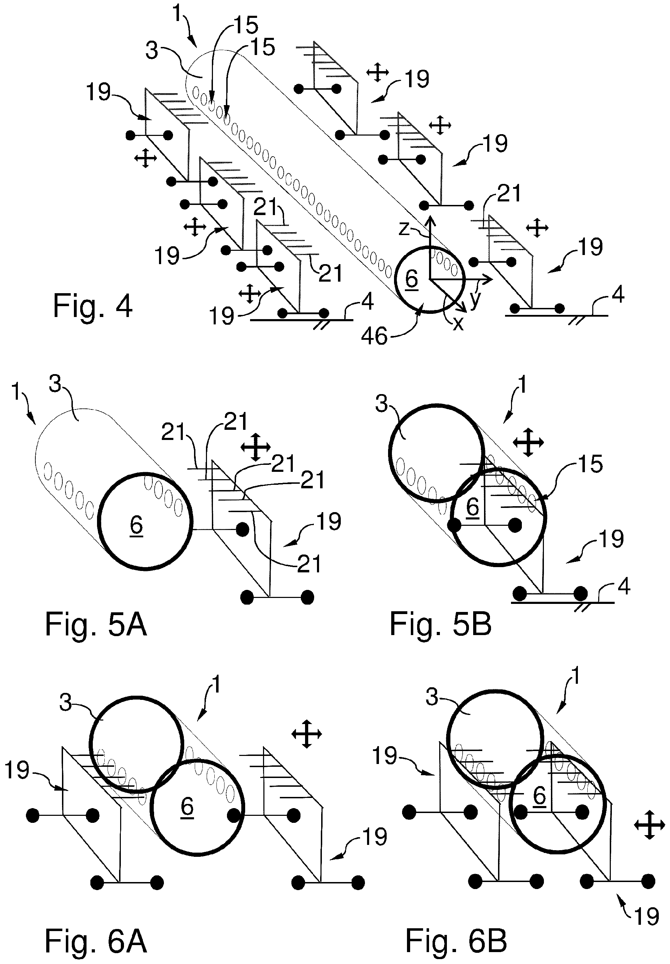

Fig. 4 shows that the fuselage section 1 may be long, and for example may correspond, according to a variant, in length to the main portion of the fuselage 1001, with the exception of a fuselage section forming the nose 1002 as well as a tail section including the empennage 1003. Then, several individually movable supporting devices 19 may be arranged laterally with respect to the fuselage section 1. In this case, each of the supporting devices 19 includes a plurality of cantilevered supporting sections 21, schematically indicated in Fig. 4, which extend substantially parallel to each other and each of which can be inserted into and through one of the window openings 15.

In other variants, the fuselage sections 1 may be shorter, such that the fuselage 1001 is assembled by connecting several fuselage sections 1 in addition to the nose and tail sections. In such variants, for example, a single supporting device 19 may be provided on one lateral side or on each of both lateral sides of the fuselage section 1. Variants of this kind are schematically illustrated in Figs. 5A-B, 6A-B, 7, 8 and 9.

In the variant of Figs. 5A-B, a single supporting device 19 is used on one lateral side of the fuselage section 1. The device 19 has cantilevered supporting sections 21 that protrude in a manner substantially parallel with each other, in a comb-shaped manner, and are provided with a length that may be less than about half of a transverse dimension of the fuselage section 1. The variant of Figs. 6A-B provides for two supporting devices 19 of the type shown in Figs. 5A-5B on opposite sides of the fuselage section 1.

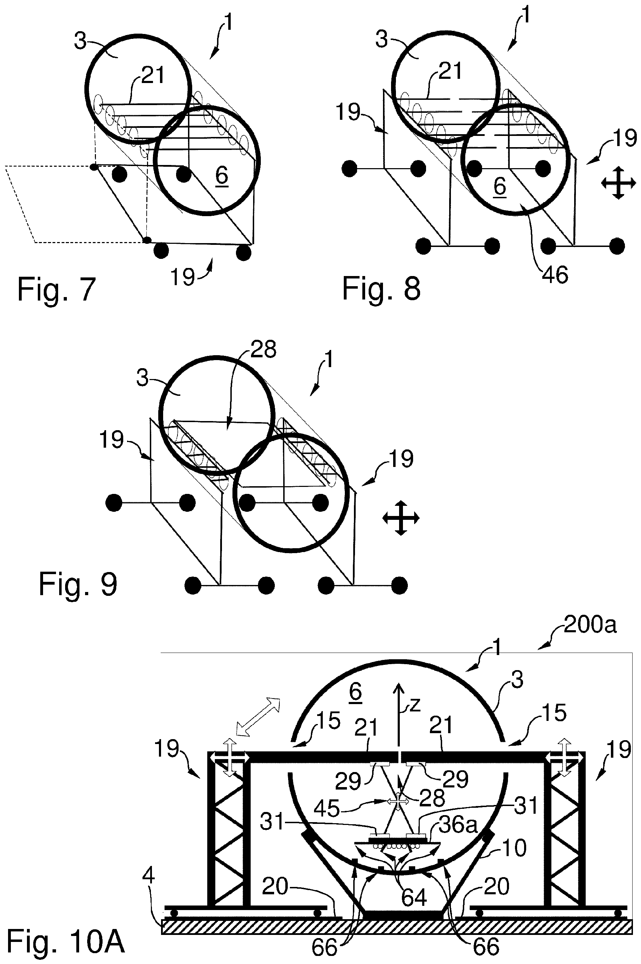

In the variant of Fig. 7, a single laterally arranged supporting device 19 is used, the cantilevered supporting sections 21 of which extend in parallel along the transverse direction y along substantially the entire transverse dimension of the fuselage section 1 when inserted into the interior 6.

Moreover, the variant of Fig. 8 corresponds to the variant of Figs. 6A-B, except in that in Fig. 8, the cantilevered supporting sections 21 are longer. Therefore, after being inserted into and through the window openings 15, free ends of the cantilevered supporting sections 21 come close to each other near a vertical center plane of the fuselage section 1, with only a small gap being left therebetween. In a further variant, the free ends of the cantilevered supporting sections 21 of Fig. 8 may be coupled in the vertical center plane of the fuselage section 1.

Still further, in the variant of Fig. 9, the cantilevered supporting sections 21 are comparatively short and, in cooperation, carry a guiding arrangement 28 configured with a longitudinally movable platform.

The cantilevered supporting sections 21 may thus be of different type and different length with respect to the transverse direction y.

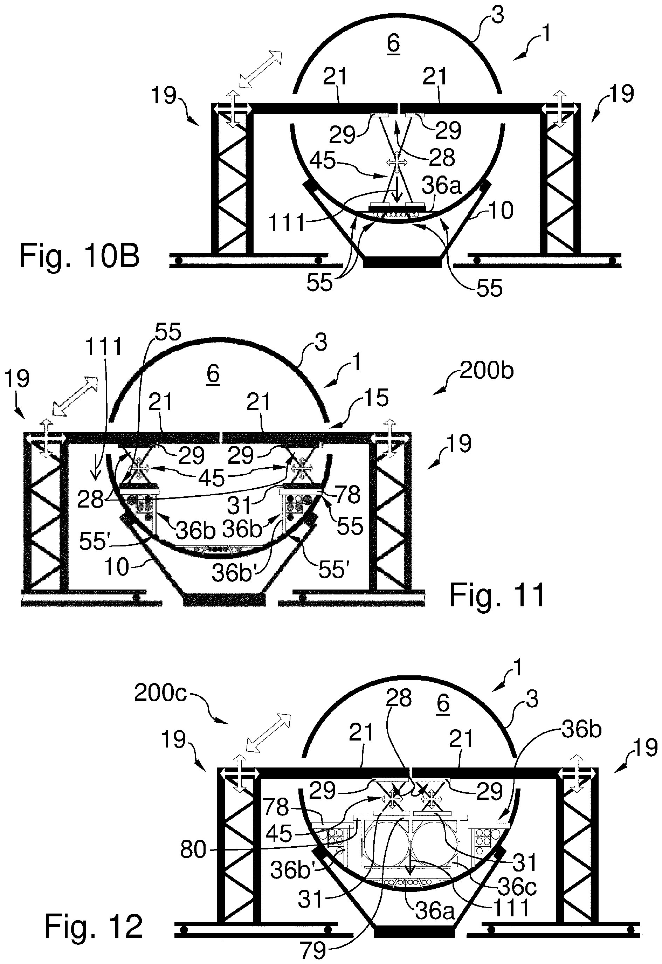

Figs. 10A, 10B illustrate steps of a method of installing a cargo hold floor module 36a according to an embodiment of the invention, and an arrangement 200a for performing the method. In Figs. 10A-B, the guiding arrangement 28 comprises guiding devices 29 which, in cooperation, support and displaceably guide a positioning arrangement 45.

On a lower side of each of the cantilevered supporting sections 21, one of the guiding devices 29 is positioned. Each guiding device 29 may, for instance, comprise a longitudinal rail attached to several respective cantilevered supporting portions 21, connecting these, and may also comprise a carriage movable along that longitudinal rail and thus along the longitudinal direction x. The carriage may be movable along the longitudinal rail in a sliding manner or using wheels, for instance.

The positioning arrangement 45 is adapted to releasably hold the cargo hold floor module 36a, and for this purpose is provided with module mounting devices 31 which can be releasably coupled to the cargo hold floor module 36a that is to be installed. The positioning arrangement 45 furthermore enables positioning of the carge hold floor module 36a within the sectional plane SP intersecting the longitudinal direction x, by positioning the module mounting devices 31.

In order to install the cargo hold floor module 36a, the cargo hold floor module 36a is coupled to the module mounting devices 31 and is then inserted into an open end side 46 of the fuselage section 1, displayed e.g. in Figs. 4, 8. In order to facilitate coupling the module 36a to the module mounting devices 31, the guiding arrangement 28 may be configured to extend from the open end side 46, so that the positioning arrangement 45, with the module mounting devices 31 supported thereby, can be displaced along the longitudinal direction x into a position located outside of the fuselage section 1.

In order to install the cargo hold floor module 36a, using the guiding arrangement 28, the positioning arrangement 45 with the module mounting devices 31 and the module 36a held thereby is moved parallel to the longitudinal direction x into the interior 6 of the fuselage section 1 to position the module 36a along the longitudinal direction x. After reaching the desired position along the longitudinal direction x, where the module 36a is to be installed, the cargo hold floor module 36a is lowered, i.e. displaced downwards in a direction parallel to the vertical direction z, and in this manner is positioned within the sectional plane SP.

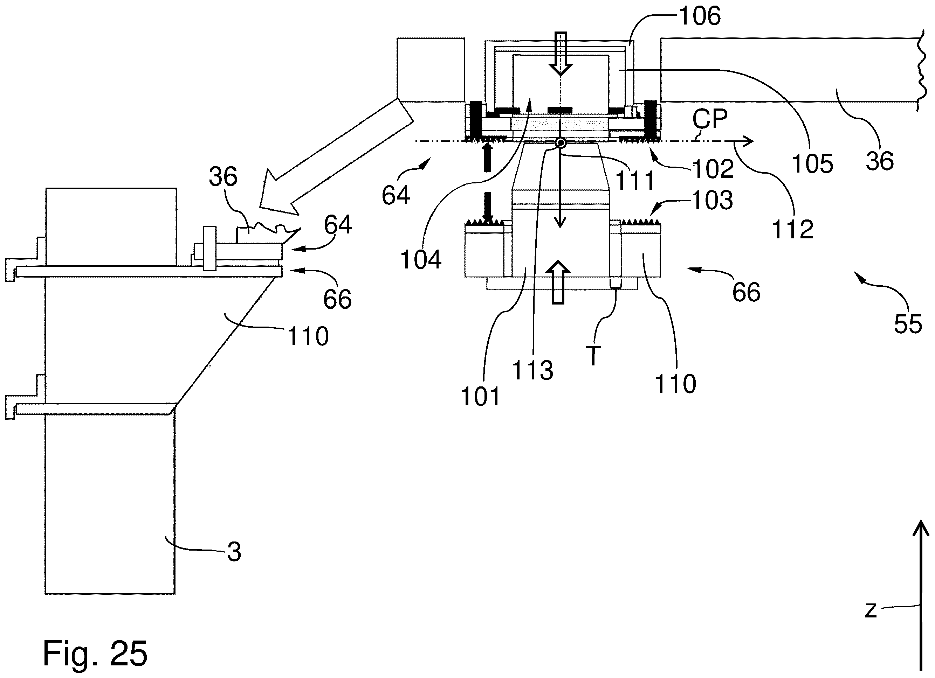

By lowering the module 36a along the vertical direction z and thereby positioning the module 36a in the sectional plane SP, several module-side interface portions 64 arranged on the cargo hold floor module 36a are each brought into operative connection with an assigned one of several section-side interface portions 66 that are mechanically coupled to the structure 3 of the fuselage section 1. Each pair of associated ones of the interface portions 64 and 66 form part of a tolerance-compensating attachment device 55 that serves to mechanically couple the module 36a to the structure 3. The attachment device 55 is adapted to compensate, preferably automatically compensate, tolerances of the module 36a and the structure 3 as the module-side interface portions 64 and the section-side interface portions 66 are being brought into operative connection. The attachment devices 55 may, for example, in the embodiment of Fig. 10A-B, each be of the type illustrated in Fig. 25, which will be explained below in more detail.

Before the operative connection of the module-side and section-side interface portions 64, 66 is established in the above-described way, the cargo hold floor module 36a is being correctly aligned and oriented with respect to a master reference, e.g. a base reference plane. The tolerance-compensating attachment devices 55 then make sure that, as the module 36a is fully lowered and the interface portions 64, 66 enter into operative connection, the proper alignment of the module 36a is maintained while attaching the module 36a to the structure 3.

By installing the cargo hold floor module 36a in this manner, the weight of the module 36a and of anyjig or device used to hold and position the module 36a, in particular the weight of the supporting devices 19 along with their cantilevered supporting sections 21, the guiding arrangements 28, the positioning arrangement 45 and the module mounting devices 31, can be entirely supported during the installation process on the load support body 4, in this embodiment the workshop floor or foundation. The module 36a can be precisely placed, with tolerances being compensated by the attachment devices 55, which are then finally fixed to fixedly attach the module 36a to the structure 3. Accordingly, when the cargo hold floor module 36a is being placed on the structure 3, the structure 3 supports the weight of the module 36a, but additional loads stemming from additional jigs or mounting devices are avoided in this way. Therefore, deformation of the structure 3 due to such additional loads, which might result in imprecisions, can be prevented.

The cargo hold floor module 36a of Figs. 10A-B therefore, based on the vertical direction of motion during installation, can be designated a "falling module", which "falls" along a first direction 111, parallel to the vertical z, from above into a precise installation position within the fuselage section 1.

Fig. 11 illustrates a method of installing triangle modules 36b according to an embodiment of the invention, and an arrangement 200b for performing the method. In the method of Fig. 11, the triangle modules 36b are lowered parallel to the vertical direction z in such a way that module-side interface portions 64, 64' arranged on the triangle module 36a are each brought into operative connection with an assigned one of several section-side interface portions 66, 66' that are mechanically coupled to the structure 3.

More specifically, in Fig. 11, each triangle module 36a includes a lateral portion 78 of a passenger cabin floor including mechanically load-bearing elements of that floor, z-struts 36b', and systems, e.g. pipes and cables, that are arranged in the triangular region enclosed by the lateral floor portion 78 and the z-strut 36b', the so-called "Bermuda triangle". More specifically, one of the module-side interface portions 64' of the respective tolerance-compensating attachment device 55' is arranged at the lower end of each z-strut 36b' and one of the module-side interface portions 64 of the respective tolerance-compensating attachment device 55 is arranged near a lateral outer edge of the lateral floor portion 78 that is part of the triangle module 36b.

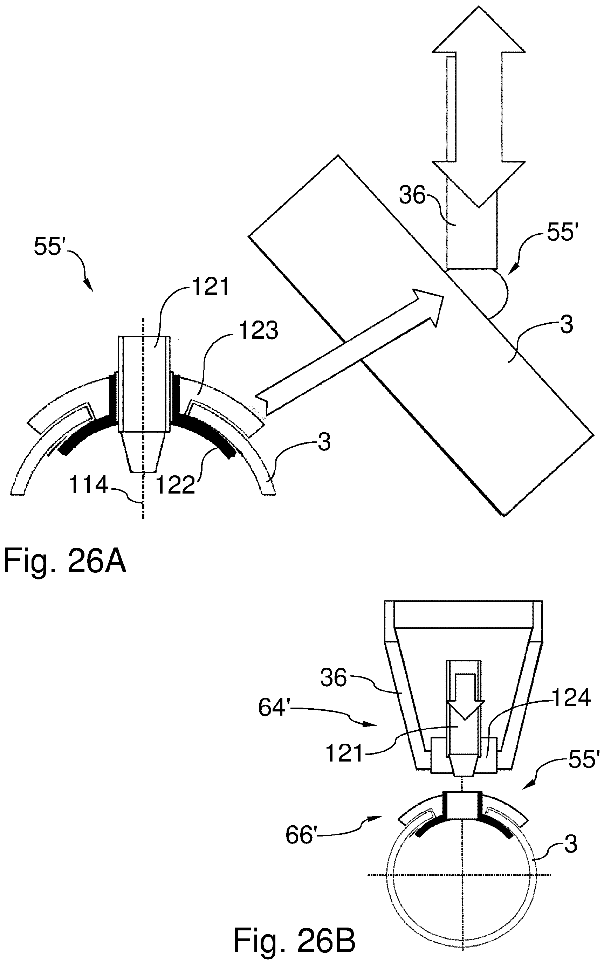

By lowering the triangle module 36b, installation thereof can also be accomplished in a rapid and precise manner. Tolerances are automatically compensated at least by the attachment devices 55. After the triangle modules 36b have each reached their respective nominal installation positions with the fuselage section 1, interface portions 64, 66 and 64', 66' of the attachment devices 55, 55', respectively, are fastened to each other, whereby the modules 36b are firmly connected to the structure 3. The attachment devices 55 provide for positional tolerance compensation within a plane, in particular a horizontal installation plane. Remaining tolerances at the level of the lower end of the z-struts 36b' can then be compensated by the attachment devices 55', which in particular enable also angular adjustment, see Fig. 26A-B.

Fig. 12 illustrates a method of installing a tank module 36c according to an embodiment of the invention, and an arrangement 200c for performing the method. The tank module 36c comprises a central portion 79 for a passenger cabin floor 80, as well as tanks that are to be accommodated beneath the passenger cabin floor 80. Using the guiding arrangement 28, the tank module 36c is longitudinally moved into the interior 6 of the fuselage section 1. Then, the tank module 36c is properly aligned and is then lowered, using a positioning arrangement 45, along the first direction 111 into the space that remains between triangle modules 36b, installed in exemplary manner according to the embodiment illustrated by Fig. 11.

Tolerance-compensating attachment devices, for example of the same type as the tolerance-compensating attachment devices 55 and/or 55' are provided for mechanically coupling the tank module 36c to the structure 3. In particular, the tank module 36c may be directly coupled to the structure 3 and/or may be coupled to the structure 3 via other components of the fuselage section 1, for example via the cargo hold floor module 36a installed in an earlier step or via the triangle module 36b, or both.

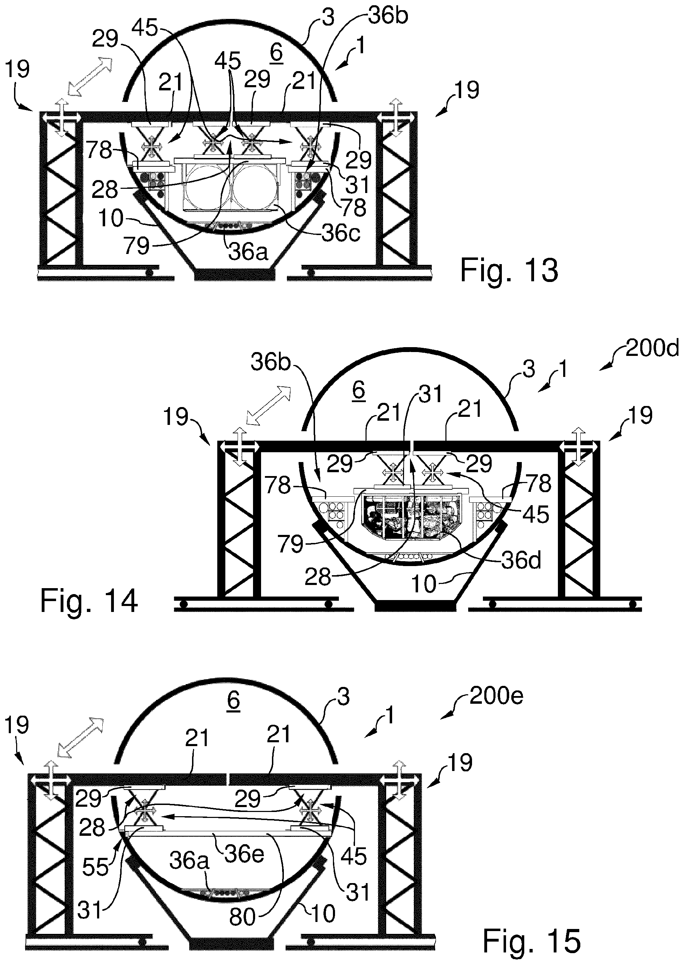

Alternatively, as illustrated in Fig. 13 for a method and arrangement of another embodiment, guiding arrangements 28 and positioning arrangments 45 may be provided which enable the installation of the triangle modules 36b and the tank module 36c at substantially the same time, or in quick succession.

In a manner analogous to the installation of the tank module 36c, a mixer unit module 36d of an air conditioning system may be installed. A corresponding embodiment of a method and arrangement 200d is illustrated in Fig. 14.

Instead of installing triangle modules 36b comprising lateral floor portions 79 as well as a module comprising a central floor portion 79 separately, a passenger cabin floor module 36e may be installed, which provides a passenger floor 80 extending as a single component transversely throughout the interior 6 of the fuselage section 1. Fig. 15 shows that in accordance with an embodiment of the invention, the guiding arrangement 28, the positioning arrangement 45 and the module mounting devices 31 may be adapted to displaceably carry and position such a floor module 36e, which is attached to the structure using tolerance-compensating attachment devices such as e.g. the attachment devices 55.

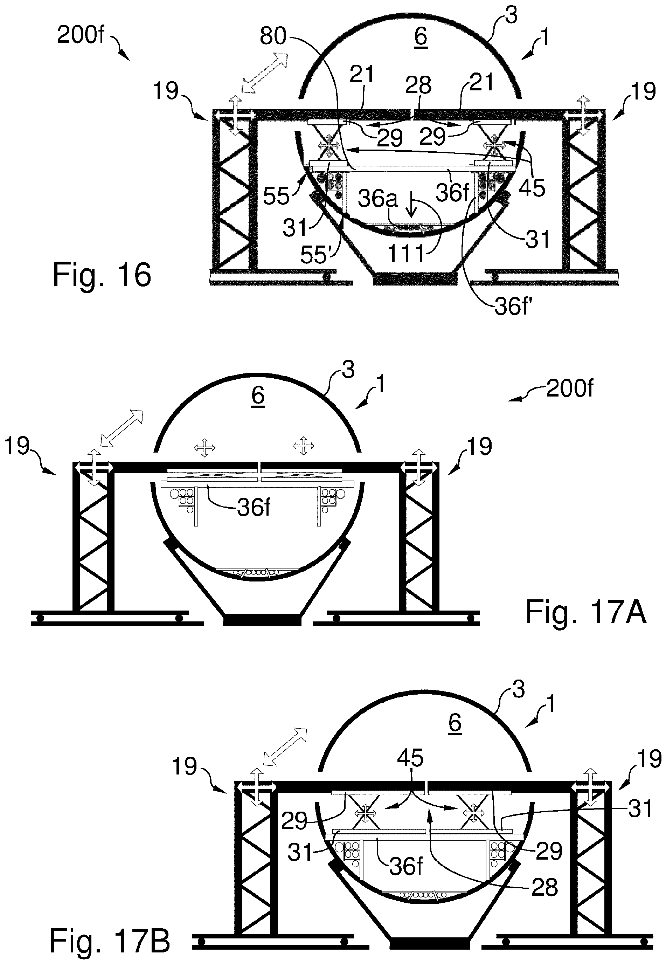

In a similar manner, in accordance with a still further embodiment illustrated in Fig. 16, an integrated passenger cabin floor and triangle module 36f can be displaceably carried by module mounting devices 31, a positioning arrangement 45 and a guiding arrangement 28, which are configured for this purpose.

The integrated passenger cabin floor and triangle module 36f comprises a unitary passenger floor 80 as well as z-struts 36f' which laterally support the passenger floor 80, and further includes systems such as pipes and cabling arranged within the so-called "Bermuda triangle".

In a manner analogous to the installation of the modules 36a-36e, the integrated passenger cabin floor and triangle module 36f is received by the module mounting devices 31 outside the fuselage section 1, is then displaced by means of guiding arrangement 28 along the longitudinal direction x into the interior 6 through an open end side 46 of the fuselage section 1, is correctly aligned and then lowered along a first direction 111 parallel to the vertical direction z, by means of the positioning arrangement 45. Tolerance-compensating attachment devices 55 and 55' may be provided in the same manner as in the embodiment of Fig. 11, wherein the devices 55 automatically compensate tolerances as the module 36f is lowered into its installation position. A method and arrangement 200f according to a variant of the embodiment of Fig. 16, shown in Figs. 17A-B, a modified guiding arrangement 28 and modified module mounting devices 31 may be provided, which are enlarged in the lateral direction y. This help to even better support the size and weight of the integrated module 36f.

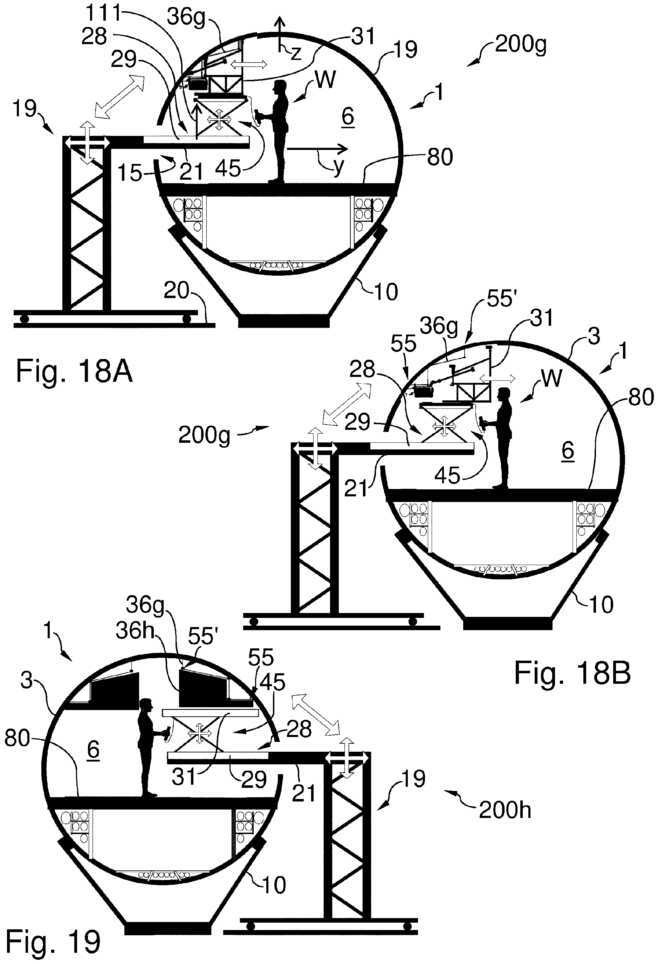

Methods and arrangements 200g, 200h, 200i for installing further modules 36g, 36h, 36i during assembly of the fuselage 1001 of the aircraft or spacecraft 1000 according to embodiments shown in Figs. 18A-20B include positioning the module 36g-36i in a first direction 111 upwards along the vertical direction z.

For example, for installing a crown module 36g, in Fig. 18A in a left-hand side upper region of the interior 6 of the fuselage section 1, the supporting device(s) 19 on one lateral side of the fuselage 1 have been omitted or removed. A cantilevered supporting section 21 of the supporting device 19 provided on the other lateral side of the fuselage section 1 has been inserted into a window opening 15 and carries a guiding device 29 on an upper side thereof.

Guiding devices 29 of adjacent cantilevered supporting sections 21, arranged in a comb-like manner as described above, in cooperation form a guiding arrangement 28 capable of supporting a positoning arrangement 45 on its upper side, see Fig. 18A-B. The positioning arrangement 45, in turn, carries a module mounting device 31 adapted to receive the crown module 36g.

Again, preferably, the module mounting device 31 receives the crown module 36g outside of the fuselage section 1. Then, using the arrangement 28, the crown module 36g is inserted into the interior through the open end side 46 and displaced along the longitudinal direction x until it reaches its desired longitudinal position. The crown module 36g is correctly aligned and oriented and then is moved upwards, parallel to the vertical direction z, using the positioning arrangement 45. Mechanical coupling of the crown module 36g to the structure 3 is achieved using tolerance-compensating attachment devices, for example a combination of attachment devices 55 and 55', as shown in Fig. 18B. During upward movement of the crown module 36g, section-side and module-side interface portions 66 and 64, 66' and 64' are brought into operative connection. After fastening of the interface portions 66 and 64, 66' and 64', respectively, to each other, a firm mechanical coupling of the crown module 36g and the structure 3 is obtained. Thereafter, the module mounting device 31 may be retracted from the crown module 36g, for example horizontally, see Fig. 18B.

In Fig. 18A-B, the installation of the crown module 36g is performed after a passenger cabin floor 80 has been substantially completely installed, at least to an extent enabling it to be used by a worker W for walking thereon inside the interior 6. The installation of the crown module 36g can be performed by the worker W using a hand-held control unit.

A symmetrical crown module 36g for the right-hand side upper region of the fuselage section 1 can be installed in like manner, using a supporting device 19 having cantilevered supporting sections 21 inserted through window openings 15, not shown in Figs. 18A-B, on the right-hand side of the fuselage section 1.

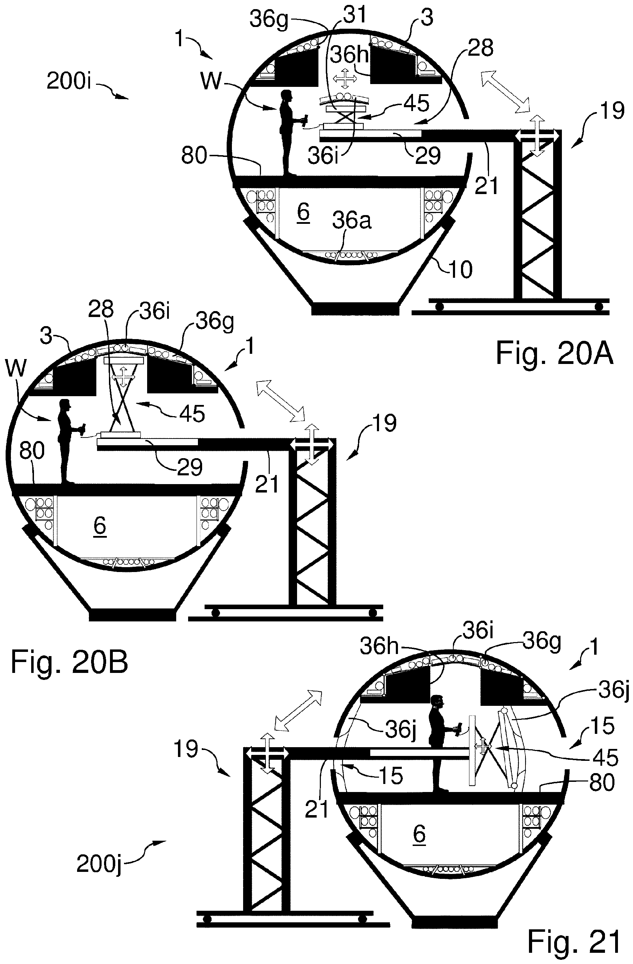

The crown modules 36g are configured to receive, in particular, various systems, e.g. pipes and cables, and also are configured to support hatrack modules 36h, see Fig. 19. The hatrack modules 36h may in a further embodiment be installed, in a manner similar to the installation of the crown modules 36g, by positioning the hatrack modules 36h upwards along the vertical direction z, using a positioning arrangement 45. In a still further embodiment, illustrated in Figs. 20A-B, a ceiling module 36i, including systems and a ceiling trim, can be installed in a manner similar to the installation of the crown and hatrack modules 36g, 36h.

Figs. 21, 22 and 23 illustrate methods and arrangements 200j, 200k, 200m for installing modules 36j, 36k and 36m, respectively, during assembly of the fuselage 1001. In Figs. 21-23, too, a supporting device 19 on a single one of both lateral sides of the fuselage section 1, comprising cantilevered supporting sections 21, is used. Each of the cantilevered supporting sections 21 is provided with a guiding device 29. The guiding devices 29, in cooperation, form a guiding arrangement 28 for displaceably guiding a positioning arrangement 45 for movement parallel to the longitudinal direction x. The positioning arrangements 45 of Figs. 21-23 are configured to enabling a positioning of a module mounting device 31 within the sectional plane SP, wherein this positioning process also includes a horizontal movement of the module mounting device 31 in a lateral, horizontal direction y.

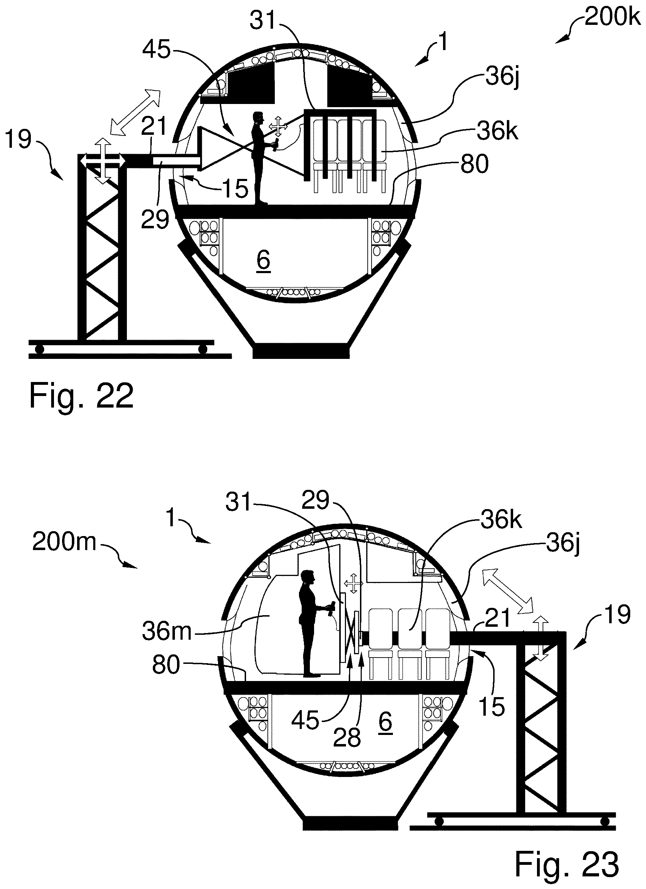

Fig. 21 illustrates installation of a sidewall module 36j, Fig. 22 illustrates installation of a seat module 36k, and Fig. 23 illustrates installation of a monument 36m, wherein the monument 36m may, for instance, be configured as a galley monument, a lavatory monument or a stowage compartment monument.

In particular, the monument 36m in Fig. 23 may be a relatively heavy module. Using the method and arrangement in accordance with the embodiment of Fig. 23, for instance, the passenger cabin floor 80, which has already been installed and has been completed or is near completion, is not subjected to loads stemming from the weight of the monument 36m during positioning. Instead, as in all other preceding embodiments, these loads are transferred to the workshop floor or foundation, which acts as a load support body 4. Only when the monument 36m has been placed at its desired, intended position, the weight thereof is supported by appropriate load-bearing elements of the floor 80. The floor 80 thereof is not deformed in any unintended manner during installation of the monument 36m. This also contributes to a precise positioning and installation of the module 36m.

In case of the installation of the sidewall modules 36j, these are aligned and then horizontally moved towards an inner wall of the structure 3 of the fuselage section 1, and are connected thereto using attachment devices which preferably provide for an automatic tolerance compensation. The seat modules 36k and the monument 36m may each be attached to load-bearing components of the passenger cabin floor 80, for example using tolerance-compensating attachment devices 55. The monument 36m may additionally be attached to a lateral inner side of the structure 3.

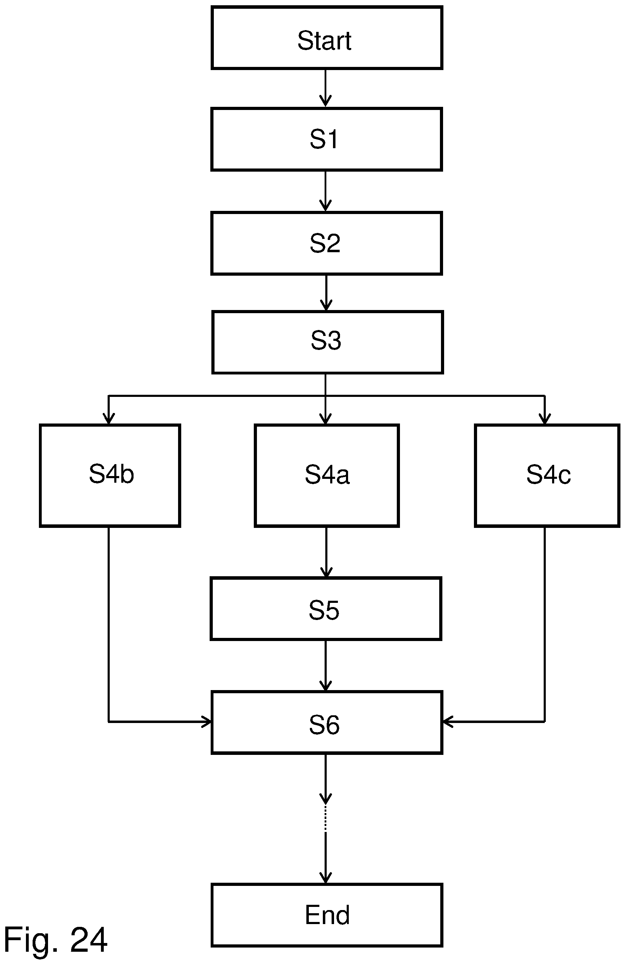

Fig. 24 schematically illustrates an exemplary embodiment of a method of installing modules during assembly of the fuselage 1001, using a flow diagram. In the exemplary embodiment of Fig. 24, it is referred to installation of the cargo hold floor module 36a, the triangle modules 36b, the tank module 36c, the passenger cabin floor module 36e and the integrated passenger cabin floor and triangle module 36f, and further the crown module 36g, but it should be understood that the modules 36a-k, 36m described above with reference to Figs. 1-23 or some of these may be installed in other combinations and sequences.

In a first step S1, cantilevered supporting sections 21 of at least one supporting device 19 are inserted through the window openings 15 provided in the structure 3 of the fuselage section 1 from an outer side thereof into the interior 6 of the fuselage section 1, by displacing the supporting device(s) 19 on the rail(s) 20 along the horizontal direction y, which is substantially perpendicular to the longitudinal direction x. Thereby, the cantilevered supporting sections 21 are displaced parallel to the direction y into the window openings 15. The rail(s) 20 which movably carry the supporting device(s) 19 is/are arranged outside of the fuselage section 1 on the workshop floor or foundation, which forms a rigid load support body 4.

In a further step S2, the guiding devices 29 of the guiding arrangement(s) 28 are installed on the cantilevered supporting sections 21 or on a plurality of the supporting sections 21. In particular, a first set of guiding devices 29 of the guiding arrangement 28 may be installed on the supporting sections 21 protruding into the interior 6 from one lateral side of the fuselage section 1, and a second set of guiding devices 29 of the guiding arrangement 28 may be installed on the supporting sections 21 protruding into the interior 6 from the opposite lateral side of the fuselage section 1, e.g. as in Fig. 10A.

In a third step S3, a positioning arrangement 45 and module mounting devices 31 carried thereby are installed, using the guiding arrangement 28, so as to be movable along the longitudinal direction x in the interior 6. The, in step S3, the cargo hold floor module 36a is received by the module mounting device 31, preferably outside the fuselage section 1. Then, the module 36a, carried by the module mounting device 31, is inserted into the interior 6 of the fuselage section 1 from the open end side 46 thereof. During this process step, the module 36a is supported and displaceably guided for movement thereof along the longitudinal direction x within the interior 6 by the guiding arrangement 28, which in turn is supported by the cantilevered supporting sections 21. The weight of the module 36a is support by the load support body 4, i.e. the workshop floor or foundation.

Further, within step S3, the module 36a is positioned within the sectional plane SP that extends substantially normal to the longitudinal direction x. By positioning the module 36a, the operative connection of the associated module-side interface portions 64 and the section-side interface portions 66 of the tolerance-compensating attachment devices 55 is brought about for mechanically coupling the cargo hold floor module 36a to the structure 3. While the module-side and structure-side interface portions 64, 66 are being operatively connected, tolerances are compensated, in particular by relative movement of elements of these interface portions 64, 66. The positioning movement of the module 36a relative to the cantilevered supporting sections 21 in particular comprises a vertical downward translational movement.

After the module 36a has been positioned and the tolerance compensation has taken place, the attachment devices 55 are brought into a finally fixed state, in other words, the interface portions 64 and 66 are firmly fixed to each other to complete the mechanical coupling of the cargo hold floor module 36a and the structure 3.

In a next step, for instance step S4a, additional guiding devices 29 may be installed on the supporting sections 21, near the lateral walls of the fuselage section 1, see again Fig. 11, and a positioning arrangement 45 and module mounting devices 31 may be mounted so as to be displaceably carried by the guiding devices 29. Then, the triangle modules 36b can be installed, as described above with reference to Fig. 11. Tolerance compensation and final attachment are brought above using the attachment devices 55, 55', having module-side and section-side interface portions 64, 64', 66, 66', in a manner analogous to the description of step S3, above.

Further, in analogous manner, the tank module 36c can be installed between the triangle modules 36b in step S5. In this manner, the passenger cabin floor 80 is closed, too.

Thereafter, the assembly process may proceed to further outfitting of the upper part of the fuselage section 1, above the passenger cabin floor 80. For example, in step S6, crown modules 36g may be installed.

In still further steps, not illustrated in Fig. 24 in detail, other modules, e.g. the hatrack modules 36h, the ceiling module 36i, the sidewall modules 36j, the seat modules 36k and/or the monuments 36m can be installed.

It should be noted that for the installation in particular of the modules 36g, 36h, 36i, 36j, 36k and/or 36m, the cantilevered supporting sections 21 on one of the lateral sides of the fuselage section 1 may be removed from the interior 6, see Figs. 18A to 23. The positioning movements within the sectional plane SP may include vertical downward or upward movement, a lateral movement parallel to a horizontal direction y, or a combination of both. Alternatively, other translational movements within the sectional plane SP are conceivable to move each module into its intended mounting position. However, it should be noted that in case of each module 36a-k, 36m, the module 36a-k, 36m is properly aligned and oriented while still suspended within the interior 6 using the cantilevered supporting sections 21. The operative connection of the module-side and section-side interfaces portions of the attachment devices, such as the devices 55 and/or 55', is brought above with the module 36a-k, 36m being correctly aligned and oriented with respect to a master reference, e.g. a reference base plane.

Instead of proceeding to step S4a, the method illustrated in exemplary manner in Fig. 24 might proceed after completion of step S3 to a step S4b of installing a passenger cabin floor module 36e or instead to a step S4c of installing an integrated passenger cabin floor and triangle module 36f. After completing step S4b or S4c, the method may proceed to step S6, in which the crown modules 36g are installed.

Figs. 10A to 23 also illustrate arrangements 200a-200k and 200m for installing a module 36a-k, 36m during assembly of the fuselage 1001. It should be understood that, in particular, the arrangements of guiding devices 29 to form one or more guiding arrangements 28 shown in the Figures may be combined. Thus, it is possible to provide the cantilevered supporting sections 21 with several guiding devices 29 on different sides thereof, for instance, in order to enable the installation of various different modules 36a-k, 36m using specifically adapted positioning arrangements 45 and module mounting devices 31. The positioning arrangements 45 and module mounting devices 31 may in this case be temporarily installed for support by the guiding arrangement(s) 28 and removed or exchanged again, as needed.

Fig. 25 illustrates the tolerance-compensating attachment device 55 in more detail, comprising the interface portions 64 and 66.

The module-side interface portion 64, connected to the module 36, which may be any of the modules 36a-k or 36m, comprises a locator cage 106 accommodating a locator bush 105, as well as a first teeth plate 102 arranged laterally with respect to an opening of a substantially cylindrical cavity 104 of the locator bush 105.

The section-side interface portion 66 comprises a second teeth plate 103 and a tapered locator pin 101 that can be translationally moved within a plane perpendicular to a longitudinal axis of the locator pin 101, relative to the second teeth plate 103. More specifically, the locator pin 101 is laterally movable with respect to an attachment 110 surrounding the locator pin 101, with a tolerance T.

In Fig. 25, the vertical direction z is indicated in exemplary manner. During the step of positioning the module 36 within the sectional plane SP, the module 36 is displaced vertically downward along a first direction 111, parallel to the vertical direction z. Yet, it is noted that the first direction 111 could in variants be oriented differently. For example, the first direction 111 may be oriented upwards, parallel to the vertical z, or transverse to the vertical z, or may be oriented obliquely.

At least during the final stage of the positioning movement within the sectional plane SP, the module 36 is translationally moved along a straight line coinciding with the first direction 111. During this linear, "falling" movement, the locator pin 101 is inserted into the cylindrical cavity 104 of the locator bush 105, wherein the pin 101 slidingly fits inside the cavity 104. In this manner, the module is "self-centering". For tolerance compensation, the locator pin 101 laterally shifts within the tolerance T. When the pin 101 is fully inserted, the first and second teeth plates 102 and 103 engage with each other and thereby fix the lateral position of the module 36 with respect to the structure 3. Advantageously, the "falling module" translationally moved along the vertical direction z downwards enables the use of the teeth plates 102, 103 at the interfaces 64, 66, which are oriented for engagement via vertical relative movement.

The attachment device 55 of Fig. 25 is thus capable of providing compensation of positional tolerances within a common plane CP, in particular along a second direction 112 and a third direction 113 that are arranged within the plane CP and are oriented normal with respect to each other and with respect to the first direction 111. In particular, the teeth plates 102, 103 may be arranged and configured in such a way as to enable a compensation of large tolerances, e.g. up to approximately 12 mm, at least in the longitudinal or flight direction x.

Fig. 25 also displays an exemplary, small portion of the structure 3, which may for example be configured as a small portion of a frame, with a cantilevered attachment 110 connected thereto.

Fig. 26A-B illustrate the tolerance-compensating attachment device 55' in more detail, comprising the interface portions 64' and 66'. The module-side interface portion 64' comprises a threaded pin 121, tapered at a forward end thereof and threadably engaged with a nut 124 connected to the module 36, for example at a lower end of the z-strut 36b' or 36f' or e.g. at an upper end of a strut that is part of the crown module 36g, for instance.

By rotation about a longitudinal axis 114, the pin 121 can be threaded into a rotary nut 122 of the section-side interface portion 66' when the module 36 is being positioned within the sectional plane SP. The rotary nut 122, in cooperation with a counterpart 123, is engaged with a partially cylindrical or spherical hollow portion of the structure 3.

Hence, the attachment device 55' can provide tolerance compensation along a longitudinal axis 114 of the threaded pin 121 as well as angular tolerance compensation about preferably two axes 115, 116, perpendicular to each other and perpendicular to the axis 114. The attachment device 55' therefore provides a rotary-joint-type attachment of the module 36 to the structure 3. The adjustability afforded by the threaded pin 121 may also provide a way of later readjustment during late customization of the fuselage 1001 or during refurbishing of the passenger cabin.

Thus, when a combination of the tolerance-compensating attachment devices 55 and 55' is used, for instance for the installation of the triangle modules 36b, the integrated passenger floor and triangle module 36f or the crown module 36g, it becomes possible to provide for triaxial compensation, for the module, e.g. 36b, 36f, 36g, as a whole, of both positional and orientational (or angular) tolerances.

Instead of using tolerance-compensating attachment devices 55 and/or 55' illustrated in Figs. 25 and 26 in detail, it is also conceivable to use tolerance-compensating devices of other type. For example, in variants of the embodiments described herein above, the tolerance-compensating devices disclosed in DE 10 2019 118 494 A1, DE 10 2019 111 001 A1 or US 2020/0339283 A1, for example, may be used.

In the embodiments described herein above with reference to Figs. 10A to 23, the positioning arrangements 45 are each schematically displayed as being configured as scissor-type mechanisms. However, such scissor-type mechanisms are exemplary only, and instead, other kinds of positioning arrangements 45 capable of producing a movement of the module mounting device 31, with the module 36a-m carried thereby, within the sectional plane SP may be used. For example, any of the positioning arrangements 45 may be configured as a pneumatic or hydraulic mechanism.

Both the guiding arrangements 28 and the positioning arrangements 45 are preferably power-actuated arrangements and are adapted to provide precisely controllable displacements, for example using remote or hand-held control.

In the embodiments described herein above with reference to the Figures, window panes, not shown in the Figures, will be installed at a late stage of the assembly process, after retraction of the cantilevered supporting sections 21 from the interior 6 has been completed.

Even though the invention has been completely described above with reference to embodiments of the invention, the invention is not limited to these embodiments but may be modified in many ways.

For instance, the fuselage to be assembled using the methods and/or arrangements of the present invention may be a generally elongate, at least partially tube-type portion of the aircraft or spacecraft, having a round, elliptical or oval cross-sectional shape or a cross-sectional shape that is generally rounded in another manner, as in the embodiments described above. Yet, the fuselage to be assembled using the method and/or arrangement of the invention may instead be configured in a manner different from a elongate tube-type shape.

### LIST OF REFERENCE SIGNS

- 1: fuselage section
- 3: structure
- 4: load support body
- 6: interior
- 10: central support
- 15: window openings
- 19: supporting device
- 20: rail
- 21: cantilevered supporting section
- 28: guiding arrangement
- 29: guiding device
- 31: module mounting device
- 36: module
- 36a: cargo hold floor module
- 36b: triangle module
- 36b': z-strut (triangle module)
- 36c: tank module
- 36d: mixer unit module
- 36e: passenger cabin floor module
- 36f: integrated passenger cabin floor and triangle module
- 36f': z-strut (triangle module)
- 36g: crown module
- 36h: hatrack module
- 36i: ceiling module
- 36j: sidewall module
- 36k: seat module
- 36m: monument
- 45: positioning arrangement
- 46: open end side (fuselage section)
- 55, 55': tolerance-compensating attachment device
- 64, 64': module-side interface portion
- 66, 66': section-side interface portion
- 78: lateral portion (passenger cabin floor)
- 79: central portion (passenger cabin floor)
- 80: passenger cabin floor
- 101: locator pin
- 102: first teeth plate
- 103: second teeth plate
- 104: cavity
- 105: locator bush
- 106: locator cage
- 110: attachment
- 111: first direction
- 112: second direction
- 113: third direction
- 114: longitudinal axis
- 115, 116: axis
- 121: pin
- 122: nut
- 123: counterpart
- 124: nut
- 200a-k: arrangement
- 200m: arrangement
- 1000: aircraft
- 1001: fuselage
- 1002: nose
- 1003: empennage
- 1004: wing
- 1005: engine
- 1006: window
- 1007: joint
- x: longitudinal direction
- y: horizontal direction
- z: vertical direction
- CP: common plane
- SP: sectional plane
- S1, S2, S3: step
- S4a: step
- S4b: step
- S4c: step
- S5, S6: step
- T: tolerance
- W: worker

## Claims

1. Method of installing a module (36, 36a-36k, 36m) during assembly of a fuselage (1001) of an aircraft or spacecraft (1000), the method comprising:
inserting cantilevered supporting sections (21) of at least one supporting device (19) through window openings (15) provided in a structure (3) of a fuselage section (1) for the fuselage (1001) from an outer side of the fuselage section (1) into an interior (6) thereof, the supporting device (19) being supported outside of the fuselage section (1) on a substantially rigid load support body (4);
inserting the module (36, 36a-36k, 36m) from an open end side (46) of the fuselage section (1) into the interior (6) thereof, and supporting and displaceably guiding the module (36, 36a-36k, 36m) for movement thereof along a longitudinal direction (x) of the fuselage section (1) in the interior (6) thereof by a guiding arrangement (28) supported by at least some of the cantilevered supporting sections (21); and
positioning the module (36, 36a-36k, 36m) within a sectional plane (SP) of the fuselage section (1) intersecting the longitudinal direction (x) of the fuselage section (1) and thereby bringing about an operative connection of a module-side interface portion (64, 64') and a section-side interface portion (66, 66') of at least one tolerance-compensating attachment device (55, 55') for mechanically coupling the module (36, 36a-36k, 36m) to the structure (3) or to another module (36a-36g) or component of the fuselage section (1).

2. Method according to claim 1,
**characterized in that** the load support body (4) is a workshop floor and/or workshop foundation.

3. Method according to claim 1 or 2,
**characterized in that** the sectional plane (SP) within which the module (36, 36a-36k, 36m) is being positioned is oriented transverse to the longitudinal direction (x) of the fuselage section (1), in particular substantially perpendicular to the longitudinal direction (x) of the fuselage section (1).

4. Method according to at least one of the preceding claims,
**characterized in that** the cantilevered supporting sections (21) are inserted into and through the window openings (15) by displacing the cantilevered supporting sections (21) and/or the supporting device (19) along a substantially horizontal direction (y).

5. Method according to at least one of the preceding claims,
**characterized in that** the supporting device (19) is movably supported on the substantially rigid load support body (4), in particular by one or more rails (20), preferably along a substantially horizontal direction (y) transverse to the longitudinal direction (x) of the fuselage section (1).

6. Method according to at least one of the preceding claims,
**characterized in that** the tolerance-compensating attachment device (55) automatically performs tolerance compensation when the module-side interface portion (64) and the section-side interface portion (66) are being brought into operative connection.

7. Method according to at least one of the preceding claims,
**characterized in that** positioning the module (36, 36a-36k, 36m) within the sectional plane (SP) comprises displacing the module (36, 36a-36k, 36m) along a first direction (111), in particular by moving the module (36, 36a-36k, 36m) along a straight line.

8. Method according to claim 7,
**characterized in that** the tolerance-compensating attachment device (55, 55') compensates tolerances at least in a second direction (112) transverse, in particular perpendicular, to the first direction (111) or **in that** the tolerance-compensating attachment device (55, 55') compensates tolerances at least in two different second and third directions (112, 113) extending within a common plane (CP) that intersects, in particular is transverse, preferably perpendicular, to the first direction (111).

9. Method according to at least one of the preceding claims,
**characterized in that** the step of positioning the module (36, 36a-k, 36m) within the sectional plane (SP) is accomplished using a positioning arrangement (45) supported by the at least some of the cantilevered supporting sections (21) via the guiding arrangement (28).

10. Method according to at least one of the preceding claims,
**characterized in that** the method includes aligning the module (36, 36a-k, 36m) with respect to a master reference and then bringing about the operative connection of the module-side and section-side interface portions (64, 66, 64', 66').

11. Method according to at least one of the preceding claims,
**characterized in that** the method further includes a step of fixing the module-side and section-side interface portions (64, 66, 64', 66') with respect to each other after the tolerance compensation has been accomplished by the attachment device (55, 55'), in order to complete the mechanical coupling of the module (36, 36a-k, 36m) and the structure (3) or the other module (36a-g) or component of the fuselage section (1).

12. Method according to at least one of the preceding claims,
**characterized in that** the step of positioning the module (36, 36a-f, 36k, 36m) includes displacing the module (36, 36a-f, 36k, 36m) along a substantially vertical direction (z), in particular vertically downwards, relative to the cantilevered supporting sections (21) and compensating positional tolerances by the tolerance-compensating attachment device(s) (55) within a substantially horizontal plane (CP).

13. Method according to at least one of the preceding claims,
**characterized in that** the method comprises mechanically coupling the module (36, 36a-k, 36m) to the structure (3) or the other module (36a-g) or component of the fuselage section (1) using at least two tolerance-compensating attachment devices (55, 55'), in particular tolerance-compensating attachment devices (55, 55') of the same type or of different type, wherein preferably each of the tolerance-compensating attachment devices (55, 55') enables at least a compensation, more preferably triaxial compensation, of positional tolerances and/or at least a compensation, preferably triaxial compensation, of angular tolerances.

14. Method according to at least one of the preceding claims,
**characterized in that** the module (36, 36a-k, 36m) is a cargo hold floor module (36a) or a triangle module (36b) or a passenger cabin floor module (36e) or an integrated passenger cabin floor and triangle module (36f) or a tank module (36c) or a mixer unit module (36d) of an air-conditioning system or a crown module (36g) or a hatrack module (36h) or a ceiling module (36i) or a sidewall module (36j) or a seat module (36k) or a monument (36m), in particular a galley monument, a lavatory monument or a stowage compartment monument.

15. Arrangement (200a-k, 200m) for installing a module (36, 36a-k, 36m) during assembly of a fuselage (1001) of an aircraft or spacecraft (1000), in particular by performing the method of any one of the preceding claims, the arrangement (200a-k, 200m) comprising:
a substantially rigid load support body (4);
at least one supporting device (19) adapted to be supported on the substantially rigid load support body (4) outside of a fuselage section (1) for the fuselage (1001), wherein the supporting device (19) has cantilevered supporting sections (21) configured to be insertable through window openings (15) provided in a structure (3) of the fuselage section (1) from an outer side of the fuselage section (1) into an interior (6) thereof; and
a guiding arrangement (28) configured to be supported by the cantilevered supporting sections (21) and adapted to support and displaceably guide the module (36, 36a-k, 36m), which is insertable from an open end side (46) of the fuselage section (1) into the interior (6) thereof, for movement of the module (36, 36a-k, 36m) along a longitudinal direction (x) of the fuselage section (1) in the interior (6) thereof;
wherein the arrangement (200a-k, 200m) is configured to enable positioning of the module (36, 36a-k, 36m) within a sectional plane (SP) of the fuselage section (1) intersecting the longitudinal direction (x) of the fuselage section (1) and thereby bringing about an operative connection of a module-side interface portion (64, 64') and a section-side interface portion (66, 66') of at least one tolerance-compensating attachment device (55, 55') for mechanically coupling the module (36, 36a-k, 36m) to the structure (3) or to another module (36a-g) or component of the fuselage section (1).
